# EUROPÄISCHE PATENTSCHRIFT

(11) **EP 2 398 579 B1**
(45) Veröffentlichungstag und Bekanntmachung des Hinweises auf die Patenterteilung: **20.03.2013**
(21) Anmeldenummer: 09775711.6
(22) Anmeldetag: 20.02.2009
(51) Int. Cl.: B01J 3/03, B01J 3/04

(54) **NADELREAKTOR**
NEEDLE REACTOR
RÉACTEUR À AIGUILLE

(43) Veröffentlichungstag der Anmeldung: 28.12.2011
(73) Patentinhaber: Premex Reactor AG, 2543 Lengnau (CH)
(72) Erfinder: PREUSS, Klaus, CH-2543 Lengnau (CH)
(74) Vertreter: Rüedi, Regula Béatrice
(86) Internationale Anmeldenummer: PCT/CH2009/000072
(87) Internationale Veröffentlichungsnummer: WO 2010/094144

(56) Entgegenhaltungen:
- WO-A-02/052279
- DE-U1- 20 018 916
- GB-A- 1 350 487

## Beschreibung

### Technisches Gebiet

Die vorliegende Erfindung betrifft einen Reaktor, der für die Durchführung von Reaktionen mit luft- und/oder feuchtigkeitsempfindlichen Substanzen, insbesondere Katalysatoren, geeignet ist. Speziell betrifft die vorliegende Erfindung Autoklaven, d.h. Reaktoren, in welchen Synthesen unter Druck oder Vakuum durchgeführt werden können.

### Stand der Technik

Zur Durchführung von Reaktionen unter Ausschluss von Luft und/oder Feuchtigkeit und unter Druck, z.B. für die Synthese bestimmter Polymere, sind schon einige Reaktoren vorgeschlagen worden.

Eine der Lösungen des Stands der Technik betrifft einen Autoklaven mit am Autoklaven selbst vorgesehenem Trennseptum, über welches er durch Einspritzen mit luft- und/oder wasserempfindlichen Substanzen befüllt werden kann, worauf dann Druck beaufschlagt wird. Diese Ausführung hat den Vorteil, dass sie preiswert und leicht zu realisieren ist. Allerdings birg sie auch die Nachteile, dass nicht unter Druck eingespritzt werden kann und dass der ganze Autoklav vorher inertisiert, d.h. von Luft und/oder Feuchtigkeit befreit werden muss, was sehr zeitaufwändig ist.

GB 1 350 487 offenbart zwei Ausführungsformen eines Reaktors mit nur einer Kammer und mit einem von dieser Kammer getrennten Kühl- oder Heizmantel. Für die Durchführung von Reaktionen unter Druck wird ein kommerziell erhältlicher Autoklav mit einer Kammer offenbart.

WO 02/052279 offenbart eine Vorrichtung, die verhindern soll, dass bei Überdruck in einem mit einem Diaphragma verschlossenen Behälter, Inhalt durch einen Einstich im Diaphragma entweichen kann. Die Vorrichtung ist geeignet, von aussen Druck auf das Diaphragma auszuüben und sie kann entfernt werden, um den Zugriff auf das Behälterinnere zu gestatten.

DE 200 18 916 U1 beschreibt einen Reaktionsdruckbehälter, der in einem Autoklaven eingesetzt werden kann. Der Reaktionsdruckbehälter ist aus Metall und kann einen Inliner enthalten, der beispielsweise aus Glas sein kann. Der Deckel des Autoklaven weist eine abgedichtete Öffnung auf, durch die ein Thermoelement im Reaktionsdruckbehälter mit dem Aussenraum verbunden ist. Ein Druckausgleich zwischen dem Reaktionsdruckbehälter und dem Autoklaven-Innenraum ist nicht vorgesehen.

Bei einer alternativen Lösung wird der ganze Reaktor in eine "glovebox" eingeschleust, befüllt, geschlossen und die Reaktion entweder in der "glovebox" oder ausserhalb durchgeführt. Dieses Vorgehen hat den Vorteil, des absoluten Ausschlusses von Luft und/oder Feuchtigkeit, daneben aber die Nachteile, dass eine "glovebox" benötigt wird und dass die Durchführung einer Reaktion in einer "glovebox" teuer und aufwändig ist.

Andere Reaktoren, welche preiswert und einfach sind, bergen den Nachteil, dass das Reaktionsmedium nicht vollständig vom Kontakt mit Luft und/oder Feuchtigkeit abgeschirmt werden kann. Solche Reaktoren weisen beispielsweise ein Septum (vorgestochen) auf und werden anschliessend aufgedrückt oder sie sind mit einem Rückschlagventil versehen und werden anschliessend in einem Druckgefäss aufgedrückt.

Es besteht folglich weiterhin der Bedarf an einem verbesserten Reaktor/Autoklaven, der die Durchführung von Reaktionen unter Ausschluss von Luft und/oder Feuchtigkeit und unter Über- oder Unterdruck ermöglicht und die oben genannten Nachteile nicht aufweist.

### Darstellung der Erfindung

Ziel der vorliegenden Erfindung war die Bereitstellung eines Autoklaven/Reaktors, der die Durchführung von Reaktionen unter Ausschluss von Luft und/oder Feuchtigkeit und unter Über- oder Unterdruck ermöglicht, die Zugabe von weiteren Reaktanden unter Über- oder Unterdruck gestattet und trotzdem preiswert und leicht zu handhaben ist.

Diese Aufgabe wird durch einen Mehrkammerreaktor gemäss der vorliegenden Erfindung gelöst, der eine äussere Kammer und mindestens eine innere Kammer aufweist, wobei die mindestens eine innere Kammer durch einen Reaktor/Liner gebildet wird, der mit einem Verschluss, insbesondere einem Septum oder einer mittels einer Nadel durchstossbaren Scheibe, verschlossen ist, und die äussere Kammer ein Autoklav ist, wobei der Autoklav aus einem Autoklavkörper und einem Autoklavdeckel gebildet wird, wobei der Autoklavdeckel mindestens eine Nadel mit einer Nadelwand, die eine innere und eine äussere Oberfläche umfasst, und mindestens eine erste Öffnung für die Nadel aufweist, derart, dass diese mindestens eine erste Öffnung gegenüber der äusseren Oberfläche der Nadelwand abgedichtet ist.

Unter Nadel wird im Rahmen dieser Erfindung stets eine Hohlnadel bzw. ein rohrförmiger Körper mit mindestens einem Mantel (mindestens einer Nadelwand) verstanden. Eine "gefüllte" Nadel, wie eine Nähnadel, wird als Nagel bezeichnet.

Die Nadel kann reaktor-/linerseitig stumpf oder - zum besseren, verletzungsärmeren Durchstechen des Verschlusses - angeschliffen sein.

Die Nadel im Autoklavdeckel kann entweder derart angeordnet sein, dass sie reaktorseitig so weit über den Autoklavdeckel hinaus ragt, dass sie beim Verschliessen des Autoklaven den Verschluss durchstösst, oder aber derart, dass die Nadel im Autoklavdeckel beweglich angeordnet ist, sodass sie nach Verschliessen des Autoklaven zum Reaktor hin und durch den Verschluss hindurch verschoben werden kann.

In einer bevorzugten Ausführunsform ist der erfindungsgemässe Mehrkammerreaktor derart gestaltet, dass zwischen der mindestens einen inneren Kammer und der äusseren Kammer mindestens ein teilweiser Druckausgleich gewährleistet ist. Dies kann beispielsweise dadurch erreicht werden, dass die Nadel derart gestaltet ist, dass sie einen Druckausgleich zwischen der inneren Kammer und der äusseren Kammer gestattet, beispielsweise dadurch, dass die Nadel eine mindestens in einem Teilbereich nicht ganz dichte Wand aufweist oder aber, dadurch, dass die Nadel eine doppelwandige Nadel ist mit einer inneren Wand und einer äusseren Wand, wobei die äussere Wand mindestens in einem Teilbereich nicht ganz dicht ist. Dieser Teilbereich der Nadelwand, der nicht ganz dicht ist, steht bei Anwendung des Mehrkammerreaktors mindestens teilweisse in Kontakt mit der äusseren Kammer.

Bei Verwendung einer doppelwandigen Nadel ist es bevorzugt, dass sich die innere Wand der Nadel weiter in den Reaktor hinein erstreckt als die äussere Wand. Dadurch wird optimales Spülen des Reaktorinhalts und optimale Sicherheit gegenüber Zutritt unerwünschter Fremdgase erreicht, insbesondere, wenn der Druckausgleich zwischen äusserer Kammer und innerer Kammer im Bereich der äusseren Kammer mittels eines kostengünstigeren, weniger sauberen Gases erzeugt wird.

Alternativ zur Erzeugung eines Druckausgleichs über eine Nadel mit mindestens teildurchlässiger Wand, kann der Druckausgleich auch über eine zweite Öffnung, einen zweiten Durchstich im Verschluss erfolgen. Ein solcher Durchstich kann mittels einer Stechvorrichtung, z.B. einem Nagel oder einer Nadel, erfolgen, welche keinerlei dauerhafte Verbindung durch den Autoklavdeckel hindurch aufweisen muss und deshalb abdichtungsmässig einfach zu realisieren ist. Ein Nagel wird nach Durchstich wieder aus dem Verschluss herausgezogen, während eine Nadel im Verschluss belassen werden kann, was zu einer definierteren Öffnung führt.

In einer weiteren bevorzugten Ausführungsform weist der erfindungsgemässe Mehrkammerreaktor mindestens eine zweite Öffnung auf, wobei diese mindestens eine zweite Öffnung in Kontakt mit der äusseren Kammer steht. Diese zweite Öffnung ist üblicherweise mit einer Gaszuführung verbunden, welche der äusseren Kammer des Mehrkammerreaktors Gas für den Druckaufbau zuführt. Diese direkte Gaszuführung in die äussere Kammer hat zwei Vorteile. Einerseits lässt sich der Druckaufbau viel rascher realisieren, andererseits kann teures, hochreines Gas gespart werden, da solches nur in die innere Kammer eingeleitet werden muss und zwar in Mengen, um dort konstant einen leichten Überdruck zu gewährleisten.

Alternativ oder zusätzlich, kann diese eine zweite Öffnung auch mit einer Vakuumpumpe gekoppelt sein, um Reaktionen unter Unterdruck durchzuführen resp. zu beobachten. In diesen Fällen wird über die Nadel nur eine minime Menge Inertgas in die innere Kammer eingeleitet, gerade genug um sicher zu stellen, dass bei Schwankungen in der Leistung der Vakuumpumpe nicht Luft und/oder Feuchtigkeit in die innere Kammer eindringen kann.

In einer Ausführungsform, die sowohl das Arbeiten unter Druck als auch unter Vakuum gestattet, kann der Autoklav zwei zweite Öffnungen aufweisen, eine gekoppelt an eine Gaszuführung, eine zweite gekoppelt an eine Vakuumpumpe.

Nicht nur die ersten sondern auch die zweiten Öffnungen im Autoklaven befinden sich vorzugsweise im Autoklavdeckel. Diese sind üblicherweise am Autoklaven oder aber innerhalb der Zu- resp. Abführleitungen mit Ventilen und vorzugsweise mit Druck- resp. Flussmessgeräten und/oder Druck- resp. Durchflussreglern versehen.

Für die Durchführung komplexer Reaktionen kann der Mehrkammerreaktor pro innere Kammer mindestens zwei je gegenüber der äusseren Oberfläche der Nadelwand abgedichtete Einlassöffnungen haben. Dies ermöglicht die Zuführung von zwei oder mehr Gasen, beispielsweise einem Inertgas und einem Reaktivgas, oder einem Inertgas und einer Reaktionslösung, etc.

Eine Ausführungsform mit 2 Nadeln pro Reaktor/Liner kann auch dazu dienen, mit der einen Nadel Reaktionsmedium zu entnehmen.

Der erfindungsgemässe Mehrkammerreaktor kann eine einzige innere Kammer aufweisen, z.B. um eine Reaktion mit relativ grossem Volumen durchzuführen, oder er kann mehrere, üblicherweise mindestens drei rotationssymmetrisch angeordnete innere Kammern aufweisen. Mehrere innere Kammern haben den Vorteil, dass mindestens zwei Reaktionen unter möglichst identischen Bedingungen durchgeführt werden können. Die bevorzugte Mindestzahl von 3 ergibt sich für die gleichzeitige Durchführung einer Blind- oder Vergleichsprobe, was gerade bei kritischen Stoffen wichtig ist, um möglichst sicher zu stellen, dass die erhaltenen Resultate nicht auf z.B. ungewollte Anwesenheit von Luft und/oder Feuchtigkeit zurückzuführen sind.

In diesem Sinne ist es auch vorteilhaft, die äussere Kammer mit Sensoren zu versehen, welche die Gasqualität und/oder den Reaktionsverlauf anzeigen. Solche Sensoren beinhalten Temperatursensoren, Drucksensoren, spektrometrische bzw. optische Sensoren, pH-Sensoren, Leitfähigkeitssensoren etc.

Um gute Durchmischung innerhalb des Mehrkammerreaktors zu gewährleisten ist es vorgesehen, den Mehrkammerreaktor mit einer Mischvorrichtung zu versehen, beispielsweise mit einer Schüttelplatte oder einem Ultraschallgenerator oder mit einem Magnetrührwerk pro innere Kammer, welches gegenüber jeder inneren Kammer zentriert ist, wobei jede innere Kammer ein Magnetrührstäbchen enthält.

Ferner kann der erfindungsgemässe Mehrkammerreaktor mit einem Heiz- und/oder Kühlmodul versehen sein.

Neben einem Kühlaggregat, das in Kontakt mit dem Autoklaven steht und die Kammern via die Wände des Autoklaven kühlt, kann auch die mindestens eine Nadel mit einer Kühlung versehen sein, so dass sie als Durchflusskondensator dienen kann.

Der erfindungsgemässe Mehrkammerreaktor kann alleine oder in einer Anlage als Modul eingesetzt werden. Eine solche Anlage, welche mindestens zwei Mehrkammerreaktoren umfasst, zeichnet sich dadurch aus, dass die Mehrkammerreaktoren mindestens eine Zuleitung und/oder mindestens ein Heiz- und/oder Kühlmodul und/oder mindestens eine Vakuumpumpe gemeinsam haben.

Bei der Herstellung eines erfindungsgemässen Mehrkammerreaktors ist grosser Wert auf das Abdichten bzw. die Dichtung aller Durchführungen zu legen. Dies wird beispielsweise durch die Verwendung von Gummidichtungen, insbesondere Silikondichtungen erreicht. Als Material für den Autoklaven eignen sich herkömmliche Autoklavenmaterialien, insbesondere hochwertige Stahltypen, wie austenitische nichtrostende Edelstähle, Nickellegierungen, Titan etc.

Durch die Verwendung eines innerhalb des Autoklaven liegenden Reaktors/Liners ist das Autoklavenmaterial unkritisch und dank der geringen auszuhaltenden Druckunterschiede zwischen innerer Kammer und äusserer Kammer kann fast jedes Material für den Liner verwendet werden, beispielsweise Kunststoffe aber auch Glas oder Metall. Der Verschluss des Reaktors/Liners ist vorzugsweise aus Silikon, kann aber auch aus einem anderen, bei Durchstich gut dichtenden Material sein.

Dank der praktisch uneingeschränkten Wahlmöglichkeit für das Linermaterial, lassen sich im erfindungsgemässen Mehrkammerreaktor auch Reaktionen mit aggressiven und/oder korrosiven Chemikalien durchführen.

Die Verwendung eines Liners verhindert weitestgehend die Verschmutzung des Autoklaven und erleichtert die Reinigung. Da die Liner im Allgemeinen kostengünstig sind, lassen sie sich in solchen Mengen beschaffen, dass mindestens zwei Autoklavfüllungen vorhanden sind, so dass die Reinigung des einen Satzes - falls die Liner überhaupt gereinigt werden sollen - vorgenommen werden kann, während sich der zweite Satz im Autoklaven befindet. So kann der Mehrkammerreaktor praktisch ohne "Totzeit" betrieben werden.

Die Möglichkeit, den Druck in der inneren Kammer und in der äusseren Kammer zum grossen Teil unabhängig von einander einzustellen, ermöglicht es, die Reaktionen so durchzuführen, dass kein Reaktionsmedium resp. Lösungsmitteldampf in der äusseren Kammer auskondensiert.

Ein weiterer Gegenstand der vorliegenden Erfindung ist ein Verfahren zur Durchführung einer chemischen Reaktion oder eines Adsorptionsexperimentes mit mindestens einer luft- und/oder feuchtigkeitsempfindlichen Reaktionskomponente unter Druck oder Vakuum und unter Verwendung eines erfindungsgemässen Mehrkammerreaktors. Dieses Verfahren umfasst die Schritte, dass
(a) eine oder mehrere Reaktionskomponenten unter Inertbedingungen in den Reaktor/Liner gefüllt werden, dass
(b) der Reaktor/Liner anschliesssend unter Inertbedingungen mittels eines Verschlusses verschlossen wird, dass
(c) die mindestens eine Nadel mit Inertmedium durchgespült wird, dass
(d) der Verschluss während des Spülens der Nadel mit Inertmedium von der Nadel durchstochen wird, dass
(e) innerhalb des Reaktors/Liners mittels des über die Nadel zugeführten Inertmediums ein Überdruck erzeugt wird, dass
(f) zwischen der mindestens einen inneren Kammer und der äusseren Kammer ein Druckausgleich erzeugt wird, und dass nach Erreichen der Ausgangsbedingungen die Reaktion oder das Experiment durchgeführt wird.

Vorzugsweise erfolgt der Druckausgleich zwischen innerer Kammer und äusserer Kammer mindestens teilweise über eine Druckausgleichsöffnung im Verschluss oder über eine Nadel, die mindestens in einem oberen, mindestens teilweise in Kontakt mit der äusseren Kammer stehenden Bereich eine durchlässige Aussenwand aufweist. Dabei wird vorzugsweise sichergestellt, dass innerhalb der inneren Kammer gegenüber der äusseren Kammer stets ein geringer Überdruck besteht, was den Zutritt von gegebenenfalls weniger sauberem Gas aus der äusseren Kammer in die innere Kammer verhindert. In einer bevorzugten Ausführungsform liegt das Δp im Bereich von 5 mbar bis 2 bar, speziell bevorzugt im Bereich von 10 mbar bis 100 mbar, insbesondere um ca. 10 mbar.

Um das Verfahren, insbesondere das Erreichen des Reaktionsdrucks, zu beschleunigen, ist es bevorzugt nicht den ganzen Druckaufbau durch Druckausgleich zwischen der inneren und der äusseren Kammer zu erzielen, sondern einen Teil des Druckaufbaus in der äusseren Kammer über direkte Zufuhr von Druckausgleichsmedium von ausserhalb des Mehrkammerreaktors direkt in die äussere Kammer zu erzeugen. Wird das Kriterium des Überdrucks in der inneren Kammer befolgt, so kann als Druckausgleichsmedium, welches direkt in die äussere Kammer eingeleitet wird, ein günstigeres, weniger inertes Gas eingesetzt werden, was zu grossen Kostenersparnissen führen kann.

Reaktionen und Experimente, die sich in dem erfindungsgemässen Mehrkammerreaktor sehr gut durchführen lassen, sind Hochdruckreaktionen aber auch Reaktionen bei Unterdruck, d.h. bei Drucken unter 1 bar. Solche Reaktionen sind beispielsweise Polymerisationsreaktionen, wie die Herstellung von Polyolefinen, z.B. Polyethylen (PE), Polypropylen (PP) oder PE-PP-Mischpolymerisate unter Verwendung von luft- und/oder feuchtigkeitsempfindlichen Katalysatoren, aber auch Adsorptions/Desorptions-Experimente.

Je nach Anzahl der Zuführungen und/oder Abführungen (Nadeln) zu einer inneren Kammer ist es möglich, Einstufen- oder Mehrstufenreaktionen durchzuführen, resp. diese durch Probenahme zu überwachen.

Eine Reaktion kann nach Erreichen der gewünschten Druckverhältnisse durch Zugabe eines für die Reaktion essentiellen Stoffs durch die mindestens eine Nadel und/oder durch Temperaturerhöhung etc. gestartet werden.

Die Entnahme von Flüssigkeitsproben kann beispielsweise durch Herausdrücken der Probe durch eine Nadel infolge des im Reaktor/Liner herrschenden Überdrucks gegenüber dem ausserhalb des Mehrkammerreaktors herrschenden Atmosphärendruck erfolgen. Die Probenmenge kann durch Einstellung des Nadelniveaus bestimmt werden (Herausdrücken der Flüssigkeit bis deren Niveau mit dem Niveau der Nadelspitze übereinstimmt).

### Kurze Beschreibung der Zeichnungen

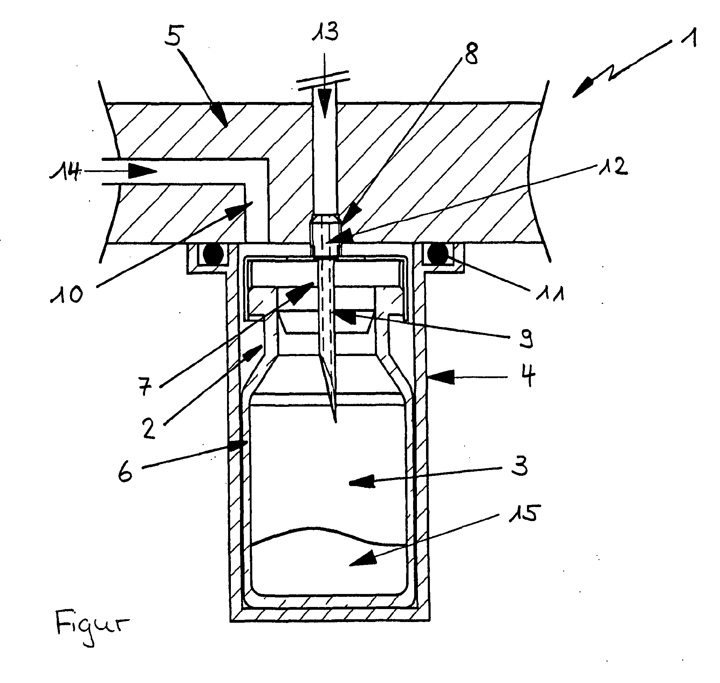

Weitere Ausgestaltungen, Vorteile und Anwendungen der Erfindung ergeben sich aus den abhängigen Ansprüchen und aus der nun folgenden Beschreibung anhand der Figur. Dabei zeigt die

**Figur** einen Zweikammerreaktor im Querschnitt.

### Wege zur Ausführung der Erfindung

Der erfindungsgemässe Mehrkammerreaktor 1, gemäss der Figur ein Zweikammerreaktor, umfasst eine äussere Kammer 2 und mindestens eine (in der Figur dargestellt eine) innere Kammer 3 enthaltend ein Reaktionsmedium 15. Die äussere Kammer 2 wird begrenzt durch einen druckfesten Aussenmantel oder Autoklav, gebildet aus einem Autoklavkörper 4 und einem Autoklavdeckel 5. Angeordnet innerhalb dieser äusseren Kammer 2 ist mindestens ein Reaktor oder Liner 6, der mit einem Verschluss 7, insbesondere einem Septum oder einer durchstossbaren Scheibe, verschlossenen ist. Im Autoklavdeckel 5 angeordnet sind eine erste Öffnung 8 mit einer Nadel 9 und eine zweite Öffnung 10. Die Dichtung zwischen Autokalvkörper 4 und Autoklavdeckel 5 erfolgt mittels üblicher Dichtungsmassnahmen, wie Dichtungsring 11 und/oder Dichtungspaste. Die Aussenwand der Nadel 9 ist gegenüber der ersten Öffnung 8 mittels eines Dichtungsrings (nicht gezeigt) und/oder einer Gewindesicherung 12 abgedichtet. Die Nadel ist umgebungsseitig verbunden mit einer Gas- und/oder Reaktionsmediumzuführung 13. Die zweite Öffnung ist umgebungsseitig ebenfalls gekoppelt an eine Gaszuführung und/oder eine Vakuumpumpe 14.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Mehrkammerreaktor (1) mit einer äusseren Kammer (2) und mindestens einer inneren Kammer (3), wobei die mindestens eine innere Kammer (3) durch einen Reaktor/Liner (6) gebildet wird, der mit einem Verschluss (7) verschlossen ist, und die äussere Kammer (2) ein Autoklav ist, wobei der Autoklav aus einem Autoklavkörper (4) und einem Autoklavdeckel (5) gebildet wird, wobei der Autoklavdeckel (5) mindestens eine Nadel (9), die eine Nadelwand mit einer inneren und einer äusseren Oberfläche einschliesst, und eine erste Öffnung (8) für die Nadel (9) aufweist, derart, dass diese mindestens eine erste Öffnung (8) gegenüber der äusseren Oberfläche der Nadelwand abgedichtet ist.

2. Mehrkammerreaktor (1) gemäss Anspruch 1,
**dadurch gekennzeichnet, dass** die mindestens eine innere Kammer (3) und die äussere Kammer (2) derart gestaltet sind, dass zwischen der mindestens einen inneren Kammer (3) und der äusseren Kammer (2) mindestens ein teilweiser Druckausgleich gewährleistet ist.

3. Mehrkammerreaktor (1) gemäss Anspruch 1 oder 2, **dadurch gekennzeichnet, dass** die Nadel (9) im Autoklavdeckel (5) derart angeordnet ist, dass sie reaktorseitig so weit über den Autoklavdeckel (5) hinaus ragt, dass sie beim Verschliessen des Autoklaven den Verschluss (7) durchstösst.

4. Mehrkammerreaktor (1) gemäss Anspruch 1 oder 2, **dadurch gekennzeichnet, dass** die Nadel (9) im Autoklavdeckel (5) beweglich angeordnet ist, derart, dass sie nach Verschliessen des Autoklaven zum Reaktor/Liner (6) hin und durch den Verschluss (7) hindurch verschoben werden kann.

5. Mehrkammerreaktor (1) gemäss irgend einem der vorangehenden Ansprüche, **dadurch gekennzeichnet, dass** die Nadel (9) derart gestaltet ist, dass sie einen Druckausgleich zwischen der inneren Kammer (3) und der äusseren Kammer (2) gestattet.

6. Mehrkammerreaktor (1) gemäss Anspruch 5,
**dadurch gekennzeichnet, dass** die Nadel (9) eine mindestens in einem Teilbereich nicht ganz dichte Wand aufweist.

7. Mehrkammerreaktor (1) gemäss Anspruch 5,
**dadurch gekennzeichnet, dass** die Nadel (9) eine doppelwandige Nadel ist mit einer inneren Wand und einer äusseren Wand, wobei die äussere Wand mindestens in einem Teilbereich nicht ganz dicht ist.

8. Mehrkammerreaktor (1) gemäss Anspruch 7,
**dadurch gekennzeichnet, dass** die innere Wand der Nadel (9) sich weiter in den Reaktor hinein erstreckt als die äussere Wand.

9. Mehrkammerreaktor (1) gemäss Anspruch 5,
**dadurch gekennzeichnet, dass** die Nadel (9) eine einwandige Nadel mit dichter Wand ist und dass der Verschluss (6) neben dem Nadeldurchstich einen zweiten Durchstich aufweist.

10. Mehrkammerreaktor (1) gemäss Anspruch 9,
**dadurch gekennzeichnet, dass** am Autoklavdeckel (5) eine weitere Nadel angebracht ist, welche diesen zweiten Durchstich erzeugt.

11. Mehrkammerreaktor (1) gemäss irgend einem der vorangehenden Ansprüche, **dadurch gekennzeichnet, dass** der Autoklav mindestens eine zweite Öffnung (10) aufweist, wobei diese mindestens eine zweite Öffnung (10) in Kontakt mit der äusseren Kammer (2) steht.

12. Mehrkammerreaktor (1) gemäss Anspruch 11, **dadurch gekennzeichnet, dass** der Autoklav zwei zweite Öffnungen (10) aufweist, wobei die eine zweite Öffnung (10) der Zuführung von Gas, die andere zweite Öffnung (10) der Abführung von Gas dient.

13. Mehrkammerreaktor (1) gemäss irgend einem der vorangehenden Ansprüche, **dadurch gekennzeichnet, dass** an den ersten und/oder an den zweiten Öffnungen im Autoklaven Ventile angebracht sind, mit denen das Öffnen und Schliessen der ersten und zweiten Öffnungen bzw. von damit verbundenen Zu- bzw. Ableitungen geregelt werden kann.

14. Mehrkammerreaktor (1) gemäss irgend einem der vorangehenden Ansprüche, **dadurch gekennzeichnet, dass** er pro innere Kammer (3) mindestens zwei je gegenüber der äusseren Oberfläche der Nadelwand abgedichtete erste Öffnungen (8) hat.

15. Mehrkammerreaktor (1) gemäss irgend einem der vorangehenden Ansprüche, **dadurch gekennzeichnet, dass** er eine einzige innere Kammer (3) hat.

16. Mehrkammerreaktor (1) gemäss irgend einem der vorangehenden Ansprüche, **dadurch gekennzeichnet, dass** er mindestens drei identische, rotationssymmetrisch angeordnete innere Kammern (3) hat.

17. Mehrkammerreaktor (1) gemäss irgend einem der vorangehenden Ansprüche, **dadurch gekennzeichnet, dass** er pro innere Kammer (3) ein gegenüber der inneren Kammer (3) zentriertes Magnetrührwerk aufweist.

18. Mehrkammerreaktor (1) gemäss irgend einem der Ansprüche 1 bis 16, **dadurch gekennzeichnet, dass** er lösbar auf einer Schüttelplatte montiert ist.

19. Mehrkammerreaktor (1) gemäss irgend einem der vorangehenden Ansprüche, **dadurch gekennzeichnet, dass** er ein Heiz- und/oder Kühlmodul aufweist.

20. Mehrkammerreaktor (1) gemäss irgend einem der vorangehenden Ansprüche, **dadurch gekennzeichnet, dass** der Verschluss (7) ein Septum oder eine mittels einer Nadel durchstossbare Scheibe ist.

21. Anlage umfassend mindestens zwei Mehrkammerreaktoren (1) gemäss irgendeinem der vorangehenden Ansprüche, **dadurch gekennzeichnet, dass** die Mehrkammerreaktoren (1) mindestens eine Zuleitung und/oder mindestens ein Heiz- und/oder Kühlmodul und/oder mindestens eine Vakuumpumpe gemeinsam haben.

22. Verfahren zur Durchführung einer chemischen Reaktion oder eines Adsorptionsexperimentes mit mindestens einer luft- und/oder feuchtigkeitsempfindlichen Reaktionskomponente unter Überdruck oder Unterdruck mit einem Mehrkammerreaktor (1) gemäss einem der Ansprüche 1 bis 21, **dadurch gekennzeichnet, dass**
(a) eine oder mehrere Reaktionskomponenten unter Inertbedingungen in den Reaktor/Liner (6) gefüllt werden, dass
(b) der Reaktor/Liner (6) anschliesssend unter Inertbedingungen mittels eines Verschlusses (7) verschlossen wird, dass
(c) die mindestens eine Nadel (9) mit Inertmedium durchgespült wird, dass
(d) der Verschluss (7) während des Spülens der Nadel (9) mit Inertmedium von der Nadel (9) durchstochen wird, dass
(e) innerhalb des Reaktors/Liners (6) mittels des über die Nadel (9) zugeführten Inertmediums ein Überdruck erzeugt wird, dass
(f) zwischen der mindestens einen inneren Kammer (3) und der äusseren Kammer (2) ein Druckausgleich erzeugt wird, und dass nach erreichen der Ausgangsbedingungen die Reaktion oder das Experiment durchgeführt wird.

23. Verfahren gemäss Anspruch 22, **dadurch gekennzeichnet, dass** der Druckausgleich zwischen innerer Kammer (3) und äusserer Kammer (2) mindestens teilweise über eine Druckausgleichsöffnung im Verschluss oder über eine Nadel (9) mit mindestens in einem oberen, mindestens teilweise in Kontakt mit der äusseren Kammer (2) stehenden Bereich durchlässiger Aussenwand erfolgt.

24. Verfahren gemäss Anspruch 22 oder 23, **dadurch gekennzeichnet, dass** der Druckausgleich zwischen innerer Kammer (3) und äusserer Kammer (2) teilweise über direkte Zufuhr von Druckausgleichsmedium durch eine zweite Öffnung (10) von ausserhalb des Mehrkammerreaktors (1) in die äussere Kammer (2) erfolgt.

25. Verfahren gemäss irgend einem der Ansprüche 22 bis 24, **dadurch gekennzeichnet, dass** der Druck in der inneren Kammer (3) immer höher ist als der Druck in der äusseren Kammer (2), wobei das Δp im Bereich von 5 mbar bis 2 bar, vorzusweise im Bereich von 10 bis 100 mbar, insbesondere um ca. 10 mbar liegen sollte.

## Claims

1. A multi-chamber reactor (1) with an outer chamber (2) and at least one inner chamber (3), the at least one inner chamber (3) being formed by a reactor/liner (6) which is closed with a closure (7), and the outer chamber (2) being an autoclave, the autoclave being formed of an autoclave body (4) and an autoclave cover (5), the autoclave cover (5) having at least one needle (9) which includes a needle wall with an inner and an outer surface, and a first opening (8) for the needle (9), such that this at least one first opening (8) is sealed with respect to the outer surface of the needle wall.

2. A multi-chamber reactor (1) according to Claim 1, **characterised in that** the at least one inner chamber (3) and the outer chamber (2) are configured such that at least a partial pressure equalisation is ensured between the at least one inner chamber (3) and the outer chamber (2).

3. A multi-chamber reactor (1) according to Claim 1 or 2, **characterised in that** the needle (9) is arranged in the autoclave cover (5) such that on the reactor side it projects so far beyond the autoclave cover (5) that upon closing the autoclave it penetrates the closure (7).

4. A multi-chamber reactor (1) according to Claim 1 or 2, **characterised in that** the needle (9) is arranged movably in the autoclave cover (5), such that after closing the autoclave it can be displaced towards the reactor/liner (6) and through the closure (7).

5. A multi-chamber reactor (1) according to any one of the preceding claims, **characterised in that** the needle (9) is configured such that it permits a pressure equalisation between the inner chamber (3) and the outer chamber (2).

6. A multi-chamber reactor (1) according to Claim 5, **characterised in that** the needle (9) has a wall which is not entirely impervious at least in a partial region.

7. A multi-chamber reactor (1) according to Claim 5, **characterised in that** the needle (9) is a dual-walled needle with an inner wall and an outer wall, the outer wall being not entirely impervious at least in a partial region.

8. A multi-chamber reactor (1) according to Claim 7, **characterised in that** the inner wall of the needle (9) extends further into the reactor than the outer wall.

9. A multi-chamber reactor (1) according to Claim 5, **characterised in that** the needle (9) is a one-walled needle with a impervious wall and **in that** the closure (6) has a second port in addition to the needle port.

10. A multi-chamber reactor (1) according to Claim 9, **characterised in that** a further needle is attached to the autoclave cover (5), which needle produces this second port.

11. A multi-chamber reactor (1) according to any one of the preceding claims, **characterised in that** the autoclave has at least one second opening (10), this at least one second opening (10) being in contact with the outer chamber (2).

12. A multi-chamber reactor (1) according to Claim 11, **characterised in that** the autoclave has two second openings (10), the one second opening (10) serving to supply gas, and the other second opening (10) to remove gas.

13. A multi-chamber reactor (1) according to any one of the preceding claims, **characterised in that** valves are attached to the first and/or to the second openings in the autoclave, with which valves the opening and closing of the first and second openings or of feed lines and/or discharge lines which are connected thereto can be regulated.

14. A multi-chamber reactor (1) according to any one of the preceding claims, **characterised in that** per inner chamber (3) it has at least two first openings (8) which are each sealed off from the outer surface of the needle wall.

15. A multi-chamber reactor (1) according to any one of the preceding claims, **characterised in that** it has a single inner chamber (3).

16. A multi-chamber reactor (1) according to any one of the preceding claims, **characterised in that** it has at least three identical, rotationally symmetrically arranged inner chambers (3).

17. A multi-chamber reactor (1) according to any one of the preceding claims, **characterised in that** per inner chamber (3) it has a magnetic stirrer mechanism which is centred with respect to the inner chamber (3).

18. A multi-chamber reactor (1) according to any one of Claims 1 to 16, **characterised in that** it is mounted detachably on a shaking plate.

19. A multi-chamber reactor (1) according to any one of the preceding claims, **characterised in that** it has a heating and/or cooling module.

20. A multi-chamber reactor (1) according to any one of the preceding claims, **characterised in that** the closure (7) is a septum or a disc which can be penetrated by means of a needle.

21. An installation comprising at least two multi-chamber reactors (1) according to any one of the preceding claims, **characterised in that** the multi-chamber reactors (1) have at least one feed line and/or at least one heating and/or cooling module and/or at least one vacuum pump in common.

22. A method for carrying out a chemical reaction or an adsorption experiment with at least one air-sensitive and/or moisture-sensitive reaction component under elevated pressure or reduced pressure with a multi-chamber reactor (1) according to one of Claims 1 to 21, **characterised in that**
(a) one or more reaction components are poured into the reactor/liner (6) under inert conditions, **in that**
(b) the reactor/liner (6) is then closed under inert conditions by means of a closure (7), **in that**
(c) the at least one needle (9) is flushed through with inert medium, **in that**
(d) the closure (7) during the flushing of the needle (9) with inert medium is penetrated by the needle (9), **in that**
(e) an excess pressure is generated within the reactor/liner (6) by means of the inert medium which is supplied via the needle (9), **in that**
(f) a pressure equalisation is produced between the at least one inner chamber (3) and the outer chamber (2), and **in that** the reaction or the experiment is carried out once the starting conditions have been attained.

23. A method according to Claim 22, **characterised in that** the pressure equalisation between the inner chamber (3) and the outer chamber (2) takes place at least in part via a pressure-equalisation opening in the closure or via a needle (9) with an outer wall which is permeable at least in an upper region which is at least partly in contact with the outer chamber (2).

24. A method according to Claim 22 or 23, **characterised in that** the pressure equalisation between the inner chamber (3) and the outer chamber (2) takes place in part by directly supplying pressure-equalisation medium through a second opening (10) from outside the multi-chamber reactor (1) into the outer chamber (2).

25. A method according to any one of Claims 22 to 24, **characterised in that** the pressure in the inner chamber (3) is always higher than the pressure in the outer chamber (2), whereby the Δp should be in the range from 5 mbar to 2 bar, preferably in the range from 10 to 100 mbar, in particular around approximately 10 mbar.

## Revendications

1. Réacteur (1) à plusieurs chambres, comprenant une chambre (2) extérieure et au moins une chambre (3) intérieure, la au moins une chambre (3) intérieure étant formée par un réacteur/chemise (6), qui est fermé par une fermeture (7), et la chambre (2) extérieure étant un autoclave, dans lequel l'autoclave est formé d'un corps (4) d'autoclave et d'un couvercle (5) d'autoclave, le couvercle (5) d'autoclave ayant au moins une aiguille (9), qui renferme une paroi d'aiguille, ayant une surface intérieure et une surface extérieure, et une première ouverture (8) pour l'aiguille (9), de manière à ce que cette au moins une première ouverture (8) soit rendue étanche par rapport à la surface extérieure de la paroi de l'aiguille.

2. Réacteur (1) à plusieurs chambres suivant la revendication 1, **caractérisé en ce que** la au moins une chambre (3) intérieure et la chambre (2) extérieure sont conformées pour assurer au moins une compensation de pression en partie entre la au moins une chambre (3) intérieure et la chambre (2) extérieure.

3. Réacteur (1) à plusieurs chambres suivant la revendication 1 ou 2, **caractérisé en ce que** l'aiguille (9) est mise dans le couvercle (7) de l'autoclave, de manière à ce qu'elle dépasse du côté du réacteur tellement du couvercle (5) de l'autoclave qu'elle transperce la fermeture (7) lors de la fermeture de l'autoclave.

4. Réacteur (1) à plusieurs chambres suivant la revendication 1 ou 2, **caractérisé en ce que** l'aiguille (9) est montée mobile dans le couvercle (5) de l'autoclave, de manière à ce qu'elle puisse, après la fermeture de l'autoclave, être déplacée vers le réacteur/chemise (6) en traversant la fermeture (7).

5. Réacteur (1) à plusieurs chambres suivant l'une quelconque des revendications précédentes, **caractérisé en ce que** l'aiguille est conformée, de manière à permettre une compensation de la pression entre la chambre (3) intérieure et la chambre (2) extérieure.

6. Réacteur (1) à plusieurs chambres suivant la revendication 5, **caractérisé en ce que** l'aiguille (9) a une paroi pas tout à fait étanche, au moins dans une zone partielle.

7. Réacteur (1) à plusieurs chambres suivant la revendication 5, **caractérisé en ce que** l'aiguille (9) est une aiguille à double paroi ayant une paroi intérieure et une paroi extérieure, la paroi extérieure n'étant pas tout à fait étanche, au moins dans une zone partielle.

8. Réacteur (1) à plusieurs chambres suivant la revendication 7, **caractérisé en ce que** la paroi intérieure de l'aiguille (9) s'étend plus loin dans le réacteur que la paroi extérieure.

9. Réacteur (1) à plusieurs chambres suivant la revendication 5, **caractérisé en ce que** l'aiguille (9) est une aiguille à une seule paroi et à paroi étanche et **en ce que** la fermeture (6) a, à côté du perçage pour l'aiguille, un deuxième perçage.

10. Réacteur (1) à plusieurs chambres suivant la revendication 9, **caractérisé en ce que**, sur le couvercle (5) de l'autoclave, est mise une autre aiguille, qui produit ce deuxième perçage.

11. Réacteur (1) à plusieurs chambres suivant l'une quelconque des revendications précédentes, **caractérisé en ce que** l'autoclave a au moins une deuxième ouverture (10), cette au moins une deuxième ouverture (10) étant en contact avec la chambre (2) extérieure.

12. Réacteur (1) à plusieurs chambres suivant la revendication 11, **caractérisé en ce que** l'autoclave a deux deuxièmes ouvertures (10), l'une des deuxièmes ouvertures (10) servant à l'amenée de gaz, tandis que l'autre deuxième ouverture (10) sert à l'évacuation de gaz.

13. Réacteur (1) à plusieurs chambres suivant l'une quelconque des revendications précédentes, **caractérisé en ce que**, sur la première et/ou sur la deuxième ouverture de l'autoclave, sont mises des vannes, par lesquelles l'ouverture et la fermeture de la première et de la deuxième ouvertures ou de conduits d'amenée ou d'évacuation, qui y sont reliés, peuvent être réglés.

14. Réacteur (1) à plusieurs chambres suivant l'une quelconque des revendications précédentes, **caractérisé en ce qu'**il a, par chambre (3) intérieure, au moins deux premières ouvertures (8) rendues étanches par rapport à la surface extérieure de la paroi de l'aiguille.

15. Réacteur (1) à plusieurs chambres suivant l'une quelconque des revendications précédentes, **caractérisé en ce qu'**il a une chambre (3) intérieure unique.

16. Réacteur (1) à plusieurs chambres suivant l'une quelconque des revendications précédentes, **caractérisé en ce qu'**il a au moins trois chambres (3) intérieures identiques disposées suivant une symétrie de rotation.

17. Réacteur (1) à plusieurs chambres suivant l'une quelconque des revendications précédentes, **caractérisé en ce qu'**il a, par chambre (3) intérieure, un agitateur magnétique centré par rapport à la chambre (3) intérieure.

18. Réacteur (1) à plusieurs chambres suivant l'une quelconque des revendications 1 à 16, **caractérisé en ce qu'**il est monté de manière amovible sur un plateau secoueur.

19. Réacteur (1) à plusieurs chambres suivant l'une quelconque des revendications précédentes, **caractérisé en ce qu'**il a un module de chauffage et/ou de refroidissement.

20. Réacteur (1) à plusieurs chambres suivant l'une quelconque des revendications précédentes, **caractérisé en ce que** la fermeture est un septum ou un disque pouvant être transpercé au moyen d'une aiguille.

21. Système comprenant au moins deux réacteurs (1) à plusieurs chambres suivant l'une quelconque des revendications précédentes, **caractérisé en ce que** les réacteurs (1) à plusieurs chambres ont conjointement au moins un conduit d'amenée et/ou au moins un module de chauffage et/ou de refroidissement et/ou au moins une pompe à vide.

22. Procédé pour effectuer une réaction chimique ou une expérience d'absorption avec au moins un constituant de réaction sensible à l'air et/ou sensible à l'humidité en surpression ou en dépression avec un réacteur (1) à plusieurs chambres suivant l'une des revendications 1 à 21, **caractérisé en ce que**
(a) on remplit le réacteur/chemise (6) dans des conditions inertes d'un ou de plusieurs constituants de réaction,
(b) on ferme le réacteur/chemise (6) ensuite dans des conditions inertes au moyen d'une fermeture (7),
(c) on balaye la au moins une aiguille (9) par du fluide inerte,
(d) on transperce la fermeture par l'aiguille (9) pendant le balayage de l'aiguille (9) par du fluide inerte,
(d) on produit à l'intérieur du réacteur/chemise (6) une surpression au moyen du fluide inerte amené par l'aiguille (9),
(f) on produit une compensation de pression entre la au moins une chambre (3) intérieure et la chambre (2) extérieure et, après que les conditions initiales sont atteintes, on effectue la réaction ou l'expérience.

23. Procédé suivant la revendication 22, **caractérisé en ce qu'**on effectue la compensation de pression entre la chambre (3) intérieure et la chambre (2) extérieure, au moins en partie, par une ouverture de compensation de pression dans la fermeture ou par une aiguille (9) ayant au moins une paroi extérieure perméable dans une zone supérieure, au moins en partie, en contact avec la chambre (2) extérieure.

24. Procédé suivant la revendication 22 ou 23, **caractérisé en ce qu'**on effectue la compensation de pression entre la chambre (3) intérieure et la chambre (2) extérieure en partie par apport direct de fluide de compensation de pression par une deuxième ouverture (10) de l'extérieur du réacteur (1) à plusieurs chambres à la chambre (2) extérieure.

25. Procédé suivant l'une quelconque des revendications 22 à 24, **caractérisé en ce que** la pression dans la chambre (3) intérieure est toujours plus grande que la pression dans la chambre (2) extérieure, le Δp devant se trouver dans la plage allant de 5 mbar à 2 bar, de préférence dans la plage allant de 10 à 100 mbar, en étant notamment d'environ 10 mbar.
